# EUROPEAN PATENT SPECIFICATION

(11) **EP 1 656 010 B1**
(45) Date of publication and mention of the grant of the patent: **28.10.2009**
(21) Application number: 04766439.6
(22) Date of filing: 06.08.2004
(51) Int. Cl.: A01G 7/04, F21V 7/00, F21V 7/09

(54) **LIGHTING FIXTURE FOR CROP LIGHTING, AND METHOD**
LEUCHTE ZUR BELEUCHTUNG VON PFLANZEN UND VERFAHREN
LAMPE POUR L'ECLAIRAGE DE PLANTES ET PROCEDE CORRESPONDANT

(30) Priority: 11.08.2003 EP 03077504
(43) Date of publication of application: 17.05.2006
(73) Proprietor: A.C. Awal B.V., 5651GG Eindhoven (NL)
(72) Inventor: WYBENGA, Henk, NL-5731 KB Mierlo (NL); MOONEMANS, Robert, NL-5731 KB Mierlo (NL); SOOLS, Frans, NL-5731 KB Mierlo (NL)
(74) Representative: Riem, Charles Hendrik
(86) International application number: PCT/EP2004/051735
(87) International publication number: WO 2005/013674

(56) References cited:
- EP-A- 1 225 390
- DE-A- 4 336 023
- DE-U- 8 312 948
- NL-C- 191 857

## Description

The invention relates to a lighting fixture for crop lighting, comprising:
- a reflector having:
   substantially straight outer edges, which define a light output window;
   a principal optical plane extending transversely to the light output window;
   a first main reflector disposed opposite the light output window, which extends from a position near the principal optical plane, substantially on a first side thereof, in a direction further and further away from the light output window;
   a second main reflector disposed opposite the light output window, which extends from a position near the principal optical plane, substantially on a second side thereof;
   a first and a second side reflector disposed on the first and the second side, respectively, of the principal optical plane, comprising a first and a second of said outer edges, respectively, which are spaced from the principal optical plane by a relatively large distance in the light output window, and which extend away from the light output window towards the main reflectors, with the distance to the principal optical plane decreasing, said first side reflector extending up to a position spaced from the first main reflector by some distance;
- a lamp holder whose central axis lies substantially in said principal optical plane, in which an electrical lamp L can be mounted past the light output window.

The invention also relates to a method for lighting a crop, which method makes use of a lighting fixture.

An embodiment of such a lighting fixture is described in Dutch patent application NL-102 18 26 (NL 021124) (not pre-published), as well as in NL-191 857 C.

In the lighting fixture that is described therein, the principal optical plane also forms the plane of symmetry, so that the first and the second main reflector and likewise the first and the second side reflector are identical to each other. The main reflectors adjoin each other and may be integral with each other. The lighting fixture can be of compact construction, because the side reflectors are spaced from the main reflectors, thus forming openings, which enable airflow through the lighting fixture. The heat generated in use by a lamp mounted therein thus maintains a ventilating flow via the light output window and said openings. Said ventilating flow is of major importance with a view to preventing the lighting fixture from overheating.

The lighting fixture is suitable for being suspended in rows in greenhouses for the purpose of irradiating the crop being cultivated therein and thus stimulates the growth thereof.

It is a drawback of the known lighting fixture described in said patent that the width of a greenhouse may on the one hand make it necessary to provide an additional row of lighting fixtures for lighting the crop in its entirety, but that on the other hand part of the light being generated is radiated to the outside. In greenhouse gardening, however, a high degree of efficiency of the energy being applied is of major importance.

It is a first object of the invention to provide a lighting fixture of the kind referred to in the introductory paragraph which makes it possible to prevent said loss of light.

A second object is to provide a method of the kind referred to in the introductory paragraph which makes it possible to prevent said loss of light.

The first object of the invention is achieved in that the second main reflector extends towards the second side reflector, forming an area in which the second main reflector and the second side reflector include an angle α and β, respectively, with the light output window, the difference between said angles α and β being less than 15°.

As a result of this aspect, the lighting fixture according to the invention is asymmetrical in shape and, in addition to an area directly under the lighting fixture, it mainly irradiates only an area on the first side of the principal optical plane at the side of the lighting fixture. This makes the lighting fixture suitable for being suspended near a boundary of a field with a crop present thereon, with the middle of the field being located on the first side of the principal optical plane. This prevents the loss of light and eliminates the burden of the light on the environment. The lighting fixture may also be used for irradiating crop in the other parts of a greenhouse, however. The fact is that the lighting fixture may be of very compact construction in comparison with the known lighting fixture, because of the fact that the second main reflector extends towards the second side reflector. This achieves that less sunlight is intercepted by the lighting fixture, so that said light can be applied more for the benefit of the crop.

Advantageously, the first and the second main reflector overlap near the principal optical plane, being spaced from the light output window by a mutually different distance to as to form an opening. As a result of said difference in spacing, an opening is created just above a lamp fitted in the lighting fixture, which has a positive effect as regards the convection current, which takes place not only between the first main reflector and the first side reflector but also in the entire lighting fixture. Said overlap prevents light from exiting through said opening and burdening the environment.

A further improvement of the convection current is possible if the second main reflector is spaced from the principal optical plane by a greater distance, the difference increasing in steps, than the second side reflector in the area in which the difference between the orientation of the first main reflector and the orientation of the first side reflector is less than 15°. Given an identical shape of the first main reflector for obtaining a desired light beam, the mutual distance of the main reflectors will be greater near the principal optical plane in that case.

To enable an easy assembly of the lighting fixture, it is advantageous if the second main reflector and the second side reflector are integral with each other.

Very advantageously, the second main reflector and the second side reflector are integrally connected by means of a connecting plate, which lies substantially in a plane P through the central axis. Because of its orientation, such a connecting plate does not receive much light from the lamp, and consequently it hardly affects the light beam, whilst it enables the use of reflectors that are integral with each other, even if the second main reflector is spaced from the principal optical plane by a greater distance, the difference increasing in steps, than the second side reflector.

In an advantageous embodiment, the first main reflector, at its end remote from the principal optical plane, comprises an end strip that faces towards the principal optical plane. This embodiment obviates the risk of dispersed light being emitted upwards past the first main reflector and being lost as a result of fouling of the lamp or the lighting fixture.

To obtain an adequate spreading of the light generated by a lamp mounted in the lighting fixture, it is advantageous if the main reflectors and the side reflectors comprise facets extending substantially parallel to the outer edges.

In an advantageous embodiment, the first side reflector comprises a fillet for stepwise reduction of the distance between said side reflector and the principal optical plane, which fillet lies substantially in a plane P' through the central axis. This aspect is advantageous with a view to preventing the first main reflector from causing reflected light to fall on the first side reflector. The presence of the fillet clears the way for said reflected light.

It is advantageous if the facets of the second side reflector positioned between the fillet and the first main reflector are oriented to reflect incident light from a lamp L mounted in the lighting fixture about the central axis substantially on a side remote from the light output window of an imaginary Ø 10 mm cylinder. The diameter of the light source of a lamp mounted in the lighting fixture is generally less than 10 mm, so that this aspect prevents light being reflected back to the light source, which would not be very efficient and which might reduce the life of the light source.

The main reflectors and the side reflectors may be interconnected by opposing end plates that converge towards the main reflectors. As a result of their orientation, said end plates reflect incident light to the light output window, as a result of which said light is added to the light beam.

Advantageously, the lamp holder is disposed substantially outside the reflector. Not only does this mean that the lamp holder does not impede the course of the light rays in the lighting fixture, but in addition a smaller reflector may be used in that case, which will lead to a compacter the lighting fixture.

For easy maintenance it is advantageous if the lamp holder and the reflector are detachably interconnected, without the use of tools being required.

Maintenance is in particular facilitated in an embodiment in which the lamp holder is accommodated in a housing fitted with ballast equipment, which housing comprises a rail from which the reflector is slidably suspended. Moving the reflector not only enables easy cleaning and exchanging of the lamp, but in addition the reflector will be accessible in its entirety, without the lamp being in the way.

The lighting fixture may comprise a housing which covers the reflector, which housing is designed to enable a free convection current through the passage between the two main reflectors, having a smooth surface to prevent dirt and moisture accumulating thereon. The outside of the housing may be white, for example, so as to reflect incident sunlight.

The reflector may be made of aluminium, e.g. high-gloss or semi-high-gloss aluminium, and it may have a hammered surface structure.

The second object of the invention is achieved by using a lighting fixture according to the invention. The lighting fixture may be suspended at a relatively great height above the crop, e.g. at a height of 1.60-3.20 m, so that a relatively large area is covered.

Embodiments of the lighting fixture and the method according to the invention as claimed are shown in the drawing. In the drawing:
Figure 1 is a sectional view of the reflector along the line I-I in Figure 2, with a variant;
Figure 2 is a partially cut-away side elevation of the lighting fixture on the first side of the principal optical plane;
Figure 3 is a perspective view of the lighting fixture of Figure 2;
Figure 4 shows the light distribution diagram of the variant, and
Figure 5 shows the method according to the invention.

The Figures are purely diagrammatic and not drawn to scale. Notably, some dimensions are shown in a strongly exaggerated form for the sake of clarity. Similar components in the Figures are denoted as much as possible by the same reference numerals.

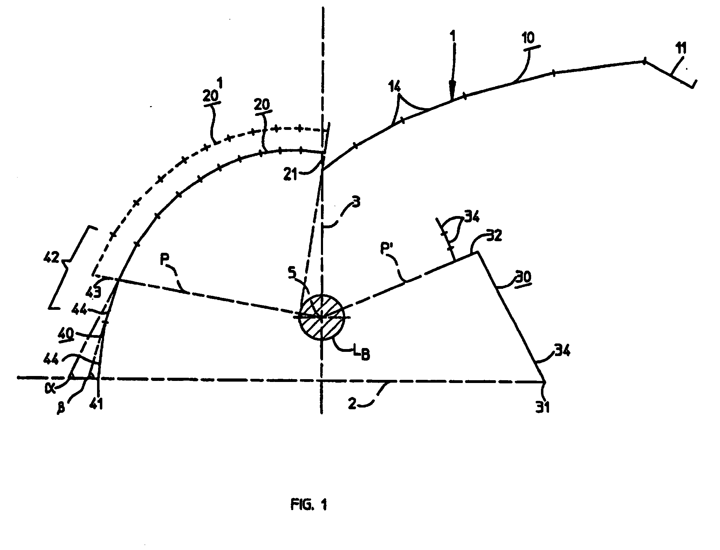

The lighting fixture for crop lighting as shown in the drawing (see Figure 1) comprises a reflector 1 having substantially straight outer edges 31, 41 which define a light output window 2. A principal optical plane 3 is oriented transversely to the light output window 2. A first main reflector 10 is disposed opposite the light output window 2, extending from a position near the principal optical plane 3, mainly on a first side thereof, further and further away from the light output window 2. A second main reflector 20 is disposed opposite the light output window 2, extending from a position near the principal optical plane, mainly on a second side thereof. Disposed on the first and the second side of the principal optical plane 3 are a first and a second side reflector 30, 40, respectively, comprising a first and a second outer edge 31, 41, respectively. The side reflectors 30, 40 are spaced from the principal optical plane 3 by a relatively large distance in the light output window 2, which distance decreases as said side reflectors extend further away from the light output window 2 in the direction of the main reflectors 10, 20. The first side reflector 30 extends to a position some distance away from the first main reflector 10.

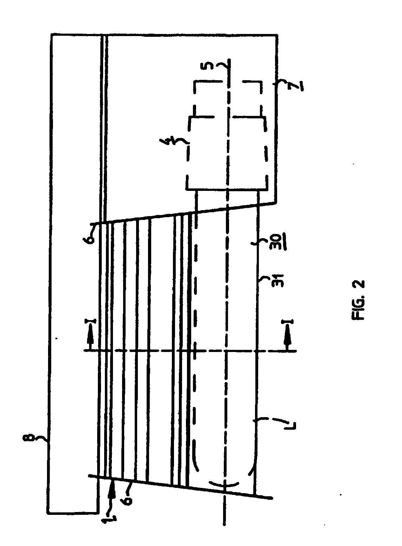

A lamp holder 4 having a central axis 5 substantially in the principal optical plane 3 is provided (see Figure 2), in which lamp holder an electrical lamp L can be mounted, compare Figure 2. As the figure shows, the lamp is accommodated substantially entirely within a space enclosed by the reflector 1 and the light output window 2.

The second main reflector 20 extends towards the second side reflector 40, forming an area 42 in which the second main reflector 20 and the second side reflector 40 include an angle α and an angle β, respectively, with the light output window 2, which angles α and β differ in magnitude by not more than 15°. In the figure, the angle α is about 63° and the angle β is about 73°. From said small difference it is already apparent that the reflectors 20, 40 are capable of irradiating adjoining or, in the case of a facetted embodiment, even overlapping areas. This is different from the first main reflector 10 and the first side reflector 30, which even send the reflected light to another side of the principal optical plane.

The first and the second main reflector 10, 20 overlap near the principal optical plane 3, at which position they are spaced from the light output window 2 by a mutually different distance so as to form an opening 21.

In the illustrated embodiment, the outer edges 31, 41 are spaced from the principal optical plane by the same distance.

In a variant, the second main reflector 20' is spaced from the principal optical plane 3 in the area 42 by a greater distance, the difference increasing in steps, than the second side reflector 40. This variant is shown in broken lines in Figure 1. As a result of said greater distance, a larger opening 21 is obtained, and thus an improved ventilation of the fixture. A convection current generated by a lamp L that is on can enter via the light output window 2 and exit not only through the passage between the first main reflector 10 and the first side reflector 30, but also through the enlarged opening 21.

In the illustrated embodiment and in the variant, the second main reflector 20 and 20', respectively, are integral with the second side reflector 40. In the variant, the second main reflector 20' and the second side reflector 40 are integrally interconnected with each other by means of a connecting plate 43 that lies substantially in a plane P through the central axis.

At the end remote from the principal optical plane 3, the first main reflector 10 comprises an end strip 11 that faces towards the principal optical plane 3.

In the illustrated embodiment, the main reflectors and the side reflectors 10, 20, 20'; 30, 40 have facets 14, 24, 34, 44, which extend substantially parallel to the outer edges 31, 41.

The first side reflector 30 comprises a fillet 32 for stepwise reduction of the distance by which the side reflector 30 is spaced from the principal optical plane 3, which fillet 32 lies substantially in a plane P' through the central axis 5.

The facets 34 of the first side reflector 30 that are located between the fillet 32 and the first main reflector 10 are oriented to reflect incident light from a lamp L that is mounted in the lighting fixture about the central axis 5 substantially on a side of an imaginary ∅ 10 mm cylinder remote from the light output window 2. Within said cylinder, the light source L_{B} will be positioned. Said light falls upon the lowermost facet 44 of the second side reflector 40, after which it is reflected to the right, seen in the figure, to contribute to the asymmetry of the light beam that is formed.

Part of the light generated by a lamp L and its light source L_{B} is directly emitted to the underlying area, without prior reflection via the light output window 2, at an angle of approximately 2 x 78° with the principal optical plane 3.

Light is added thereto to the left, seen in Figure 1, which light is reflected by the first side reflector 30, with the lowermost wide facet 34 spreading the light over a large area.

The first main reflector 10 reflects incident light to the right, seen in Figure 1, around the first side reflector and, as a result of the presence of the fillet 32 in said side reflector, at least substantially without being reflected thereon. Light reflected by the second side reflector 40 is added to the light that is being reflected to the right. Also the lower part of the second main reflector 20 reflects light to the right through the principal optical plane 3, both in the embodiment that is shown in full lines and in the embodiment that is shown in dashed lines. The upper facets 24 of the second main reflector ensure that reflected light remains on the second side of the principal optical plane 3.

The facets 14, 24, 34, 44 and the fillets 32, 43 give the reflector 1 great dimensional stability. The reflector 1, or parts thereof, e.g. the second main reflector 20, may be configured without any further facets.

The main reflectors 10, 30 and the side reflectors 20, 40 (see Figure 2) are interconnected by opposing end plates 6 that converge towards the main reflectors 10, 30.

Figure 1 shows how much more compact the lighting fixture is than in the situation in which the lighting fixture would be symmetrical with the right in the drawing.

The lamp holder 4 is disposed substantially outside the reflector 1, so that it will not impede the course of the light rays and, moreover, the spacing between the end plates 6 may be relatively small whilst nevertheless making it possible to exchange the lamp L.

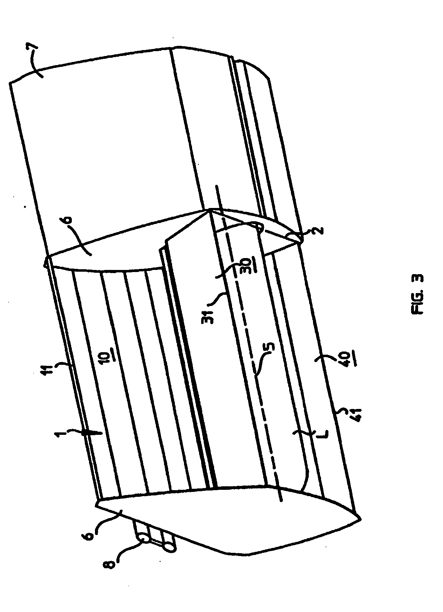

The lamp holder 4 and the reflector 1 are detachably interconnected, without the use of tools being required. The fact is that the lamp holder 4 is accommodated in a housing 7 fitted with ballast means, which housing comprises a rail 8 from which the reflector 1 is slidably suspended, see Figure 3. This makes it possible to use an even compacter lighting fixture, since the presence of a wasted space between the end plates 6 is not needed in order to make it possible to mount the lamp L in the lamp holder 4, see Figure 2.

The lamp holder is an E-40 holder, for example, in which a high-pressure sodium lamp, e.g. a 600 W lamp, can be fitted.

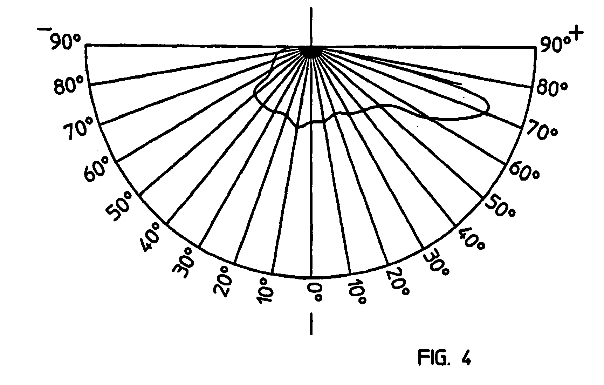

The effect of the reflector 1 appears from Figure 4. The light beam formed by the lighting fixture comprising the reflector 1 reaches its maximum at about 70° to the right. The diagram of the embodiment that is shown in full lines in Figure 1 is identical thereto.

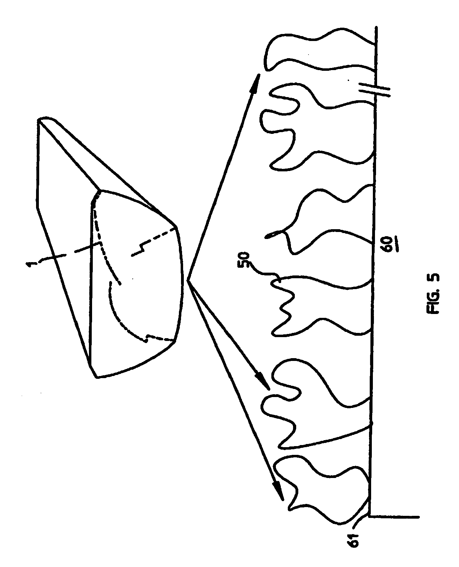

In Figure 5, a lighting fixture according to the invention comprising a reflector 1 is used in the method for lighting a crop 50. The lighting fixture is suspended over a field 60 with the crop 50, near a boundary 61 thereof.

## Claims

1. A lighting fixture for crop lighting, comprising:
- a reflector (1) having:
substantially straight outer edges (31, 41), which define a light output window (2);
a principal optical plane (3) extending transversely to the light output window (2);
a first main reflector (10) disposed opposite the light output window (2), which extends from a position near the principal optical plane (3), substantially on a first side thereof, in a direction further and further away from the light output window (2);
a second main reflector (20) disposed opposite the light output window (2), which extends from a position near the principal optical plane (3), substantially on a second side thereof;
a first and a second side reflector (30,40) disposed on the first and the second side, respectively, of the principal optical plane (3), comprising a first and a second of said outer edges (31,41), respectively, which are spaced from the principal optical plane (3) by a relatively large distance in the light output window (2), and which extend away from the light output window (2) towards the main reflector (10, 20), with the distance to the principal optical plane (3) decreasing, said first side reflector (30) extending up to a position spaced from the first main reflector (10) by some distance;
- a lamp holder (4) whose central axis (5) lies substantially in said principal optical plane (3), in which an electrical lamp L can be mounted past the light output window (2),
**characterized in that**
the second main reflector (20) extends towards the second side reflector (40), forming an area (42) in which the second main reflector (20) and the second side reflector (40) include an angle α and β, respectively, with the light output window (2), the difference between said angles α and β being less than 15°.

2. A lighting fixture as claimed in claim 1, wherein the first and the second main reflector (10, 20) overlap near the principal optical plane (3), being spaced from the light output window (2) by a mutually different distance to as to form an opening (21).

3. A lighting fixture as claimed in claim 2, wherein the second main reflector (20') is spaced from the principal optical plane (3) by a greater distance, the difference increasing in steps, than the second side reflector (40) in said area (42).

4. A lighting fixture as claimed in claim 2 or 3, wherein the second main reflector (20, 20') and the second side reflector (40) are integral with each other.

5. A lighting fixture as claimed in claim 3, wherein the second main reflector (20') and the second side reflector (40) are integrally connected by means of a connecting plate (43), which lies substantially in a plane P through the central axis.

6. A lighting fixture as claimed in claim 1 or 2, wherein the first main reflector (10), at its end remote from the principal optical plane (3), comprises an end strip (11) that faces towards the principal optical plane (3).

7. A lighting fixture as claimed in claim 1 or 2, wherein the main reflectors (10, 20) and the side reflectors (30, 40) comprise facets (14, 24, 34, 44) that extend substantially parallel to the outer edges (31, 41).

8. A lighting fixture as claimed in claim 1 or 2, wherein the first side reflector (30) comprises a fillet (32) for stepwise reduction of the distance between said side reflector (30) and the principal optical plane (3), which fillet (32) lies substantially in a plane P' through the central axis.

9. A lighting fixture as claimed in claim 8, wherein the facets (34) of the second side reflector (40) positioned between the fillet (32) and the first main reflector (10) are oriented to reflect incident light from a lamp L mounted in the lighting fixture about the central axis (5) substantially on a side remote from the light output window (2) of an imaginary ∅ 10 mm cylinder.

10. A lighting fixture as claimed in claim 1 or 2, wherein the main reflectors (10, 20) and the side reflectors (30, 40) are interconnected by opposing end plates (6) that converge towards the main reflector (10, 20).

11. A lighting fixture as claimed in claim 1 or 2, wherein the lamp holder (4) and the reflector (1) are detachably interconnected, without the use of tools being required.

12. A lighting fixture as claimed in claim 11, wherein the lamp holder (4) is accommodated in a housing (7) fitted with ballast equipment, which housing (7) comprises a rail (8) from which the reflector (1) is slidably suspended.

13. A method for lighting crop, wherein a lighting fixture is used, **characterized in that** the lighting fixture as claimed in any one of the preceding claims is used.

## Patentansprüche

1. Beleuchtungsarmatur zur Pflanzenbeleuchtung, mit folgenden Bestandteilen:
- ein Reflektor (1) mit:
wesentlich geraden Außenkanten (31, 41), die ein Lichtausgangsfenster bilden (2);
eine optische Hauptebene (3), die sich quer zum Lichtausgangsfenster (2) erstreckt;
ein erster Hauptreflektor (10), der sich gegenüber dem Lichtausgang (2) befindet und sich von einer Stelle in der Nähe der optischen Hauptebene (3) wesentlich an deren ersten Seite in eine wegweisende Richtung und eine Richtung vom Lichtausgangsfenster (2) weg erstreckt;
ein zweiter Hauptreflektor (20), der sich gegenüber dem Lichtausgang (2) befindet und sich von einer Stelle in der Nähe der optischen Hauptebene (3) wesentlich zu deren zweiten Seite erstreckt;
ein erster und zweiter Seitenreflektor (30, 40), die an der ersten beziehungsweise zweiten Seite der optischen Hauptebene (3) liegen und jeweils die erste und zweite der genannten Außenkanten (31,41) bilden, die von der optischen Hauptebene (3) durch einen relativ großen Abstand im Lichtausgangsfenster (2) getrennt sind und die sich vom Lichtausgangsfenster (2) zum Hauptreflektor (10, 20) hin erstrecken, wobei der Abstand zur optischen Hauptebene (3) abnimmt und der genannte erste Seitenreflektor (30) sich bis zu einer Position erstreckt, die in einigem Abstand zum Hauptreflektor (10) liegt;
- eine Lampenfassung (4), deren Zentralachse (5) sich wesentlich in der genannten optischen Ebene (3) befindet, in die ein elektrischer Leuchtkörper L hinter das Lichtausgangsfenster (2) angebracht werden kann, wobei
der zweite Hauptreflektor (20) sich zum zweiten Seitenreflektor (40) erstreckt und dabei ein Gebiet (42) bildet, in dem der zweite Hauptreflektor (20) und der zweite Seitenreflektor (40) mit dem Lichtausgangsfenster (2) jeweils einen Winkel α und β bilden, wobei die Differenz zwischen den genannten Winkeln α und β weniger als 15° beträgt.

2. Eine Beleuchtungsarmatur gemäß Anspruch 1, wobei der erste und zweite Hauptreflektor (10, 20) einander in der Nähe der optischen Hauptebene (3) überlappen, wobei sie vom Lichtausgangsfenster (2) durch unterschiedliche Abstände getrennt sind, sodass sie die Öffnung (21) bilden.

3. Eine Beleuchtungsarmatur gemäß Anspruch 2, wobei der zweite Hauptreflektor (20') von der optischen Hauptebene (3) durch einen größeren Abstand als der zweite Seitenreflektor (40) in genanntem Gebiet (42) getrennt ist, wobei der Abstand stufenweise ansteigt.

4. Eine Beleuchtungsarmatur gemäß Anspruch 2 oder 3, wobei der zweite Hauptreflektor (20, 20') und der zweite Seitenreflektor (40) einstückig miteinander sind.

5. Eine Beleuchtungsarmatur gemäß Anspruch 3, wobei der zweite Hauptreflektor (20') und der zweite Seitenreflektor (40) vollständig mittels der Anschlussplatte (43) verbunden sind, die wesentlich in der Ebene P durch die Zentralachse liegt.

6. Eine Beleuchtungsarmatur gemäß Anspruch 1 oder 2, wobei der erste Hauptreflektor (10) und dessen von der optischen Hauptebene (3) weiter entferntes Ende eine Endleiste (11) enthält, die gegenüber der optischen Hauptebene (3) liegt.

7. Eine Beleuchtungsarmatur gemäß Anspruch 1 oder 2, wobei die Hauptreflektoren (10, 20) und die Seitenreflektoren (30,40) Facetten (14, 24, 34, 44) enthalten, die sich wesentlich parallel zu den Außenkanten (31, 41) erstrecken.

8. Eine Beleuchtungsarmatur gemäß Anspruch 1 oder 2, wobei der erste Seitenreflektor (30) über eine Leiste (32) zur stufenweisen Reduktion des Abstandes zwischen dem genannten Seitenreflektor (30) und der optischen Hauptebene (3) verfügt und diese Leiste (32) sich wesentlich in einer Ebene P' durch die Zentralachse befindet.

9. Eine Beleuchtungsarmatur gemäß Anspruch 8, wobei die Facetten (34) des zweiten Seitenreflektors (40) zwischen der Leiste (32) und dem ersten Hauptreflektor (10) so ausgerichtet sind, dass sie das von einem Leuchtkörper L, der in der Beleuchtungsarmatur entlang der Zentralachse (5) befestigt ist, wesentlich an einer vom Lichtausgangsfenster (2) entfernten Seite eines imaginären Zylinders mit einem Durchmesser von 10 mm einfallende Licht reflektieren.

10. Eine Beleuchtungsarmatur gemäß Anspruch 1 oder 2, wobei die Hauptreflektoren (10, 20) und die Seitenreflektoren (30,40) durch gegenüberliegende Endplatten (6) miteinander verbunden sind, die zum Hauptreflektor (10, 20) konvergieren.

11. Eine Beleuchtungsarmatur gemäß Anspruch 1 oder 2, wobei die Lampenfassung (4) und der Reflektor (1) so untereinander verbunden sind, dass sich die Verbindung ohne Einsatz von Werkzeugen lösen lässt.

12. Eine Beleuchtungsarmatur gemäß Anspruch 11, wobei die Lampenfassung (4) in einem mit Vorschaltgeräten ausgestatteten Gehäuse (7) untergebracht ist und das Gehäuse (7) eine Schiene (6) enthält, an der der Reflektor (1) verschiebbar aufgehängt ist.

13. Eine Methode zur Beleuchtung von Pflanzen, bei der eine Beleuchtungsarmatur verwendet wird, wobei die Beleuchtungsarmatur jeglicher der vorangehenden Ansprüche entspricht.

## Revendications

1. Un appareil d'éclairage pour éclairer les cultures, comprenant :
- un réflecteur (1) incluant :
des arêtes extérieures (31, 41) substantiellement droites, qui définissent une fenêtre de sortie de la lumière (2) ;
un plan optique principal (3) s'étendant transversalement vers la fenêtre de sortie de la lumière (2) ;
un premier réflecteur principal (10) placé à l'opposé de la fenêtre de sortie de la lumière (2), qui s'étend depuis une position proche du plan optique principal (3), substantiellement sur un premier côté de celui-ci, dans une direction de plus en plus éloignée de la fenêtre de sortie de la lumière (2) ;
un second réflecteur principal (20) placé à l'opposé de la fenêtre de sortie de la lumière (2), qui s'étend depuis une position proche du plan optique principal (3), substantiellement sur un second côté de celui-ci ;
un premier et un second réflecteurs latéraux (30, 40) placés respectivement sur le premier et le second côté du plan optique principal (3), comprenant respectivement une première et une seconde arête desdites arêtes extérieures (31, 41), espacées du plan optique principal (3) d'une distance relativement importante dans la fenêtre de sortie de la lumière (2), et qui s'étendent depuis la fenêtre de sortie de la lumière (2) vers le réflecteur principal (10, 20), avec une distance par rapport au plan optique principal (3) décroissante, ledit premier réflecteur latéral (30) s'étendant jusqu'à une position espacée du premier réflecteur principal (10) d'une certaine distance ;
- un support de lampe (4) dont l'axe central (5) repose substantiellement sur ledit plan optique principal (3), dans lequel une lampe électrique L peut être montée après la fenêtre de sortie de la lumière (2), **caractérisé en ce que**
le second réflecteur principal (20) s'étend vers le second réflecteur latéral (40), formant une surface (42) dans laquelle le second réflecteur principal (20) et le second réflecteur latéral (40) comprennent respectivement un angle α et β avec la fenêtre de sortie de la lumière (2), la différence entre lesdits angles α et β étant inférieure à 15°.

2. Un appareil d'éclairage tel que décrit dans la revendication 1, dans lequel le premier et le second réflecteurs principaux (10, 20) se chevauchent près du plan optique principal (3), et étant espacés de la fenêtre de sortie de la lumière (2) par une distance mutuellement différente formant ainsi une ouverture (21).

3. Un appareil d'éclairage tel que décrit dans la revendication 2, dans lequel le second réflecteur principal (20') est espacé du plan optique principal (3) par une distance plus importante, avec une différence graduelle, que le second réflecteur latéral (40) dans ladite surface (42).

4. Un appareil d'éclairage tel que décrit dans la revendication 2 ou 3, dans lequel le second réflecteur principal (20, 20') et le second réflecteur latéral (40) sont intégrés.

5. Un appareil d'éclairage tel que décrit dans la revendication 3, dans lequel le second réflecteur principal (20') et le second réflecteur latéral (40) sont intégralement connectés à l'aide d'une plaque de connexion (43), qui repose substantiellement sur un plan P dans l'axe central.

6. Un appareil d'éclairage tel que décrit dans la revendication 1 ou 2, dans lequel le premier réflecteur principal (10), à son extrémité distante du plan optique principal (3), comprend une bande (11) tournée vers le plan optique principal (3).

7. Un appareil d'éclairage tel que décrit dans la revendication 1 ou 2, dans lequel les réflecteurs principaux (10, 20) et les réflecteurs latéraux (30, 40) contiennent des facettes (14, 24, 34, 44) qui s'étendent substantiellement parallèlement aux arêtes extérieures (31, 41).

8. Un appareil d'éclairage tel que décrit dans la revendication 1 ou 2, dans lequel le premier réflecteur latéral (30) comprend un filet (32) pour réduire progressivement la distance entre ledit réflecteur latéral (30) et le plan optique principal (3), lequel filet (32) repose substantiellement sur un plan P dans l'axe central.

9. Un appareil d'éclairage tel que décrit dans la revendication 8, dans lequel les facettes (34) du second réflecteur latéral (40) positionnées entre le filet (32) et le premier réflecteur principal (10) sont orientées pour réfléchir la lumière incidente d'une lampe L montée dans l'appareil d'éclairage près de l'axe central (5) substantiellement sur un côté distant de la fenêtre de sortie de la lumière (2) d'un cylindre imaginaire de 10 mm de diamètre.

10. Un appareil d'éclairage tel que décrit dans la revendication 1 ou 2, dans lequel les réflecteurs principaux (10, 20) et les réflecteurs latéraux (30, 40) sont interconnectés par des embouts opposés (6) qui convergent vers le réflecteur principal (10, 20).

11. Un appareil d'éclairage tel que décrit dans la revendication 1 ou 2, dans lequel le support de lampe (4) et le réflecteur (1) ont une interconnexion amovible, ne nécessitant pas l'usage d'outils.

12. Un appareil d'éclairage tel que décrit dans la revendication 11, dans lequel le support de lampe (4) est installé dans un boîtier (7) fixé par un ballast, ledit boîtier (7) comprenant un rail (8) depuis lequel le réflecteur (1) est suspendu de façon coulissante.

13. Une méthode pour éclairer les cultures, dans laquelle un appareil d'éclairage est utilisé, **caractérisée en ce que** l'appareil d'éclairage décrit dans toutes les revendications précédentes est utilisé.
